# EUROPEAN PATENT APPLICATION

(11) **EP 2 001 260 A2**
(43) Date of publication of application: **10.12.2008**
(21) Application number: 08425390.5
(22) Date of filing: 30.05.2008
(51) Int. Cl.: H04Q 11/00

(54) **Secure switching system for voice and data using a modular distributed architecture**

(30) Priority: 05.06.2007 IT RM20070311
(71) Applicant: Teledelta 98 S.R.L., CAP.00145 Roma (RM) (IT)
(72) Inventor: Marcello, Tommasi, 00189 Roma (RM) (IT)
(74) Representative: Di Gregorio, Marco

(57) **Abstract**

The invention consists of a Switching System for voice and data implemented by means of a modular, distributed architecture, being such architecture implemented by means of a plurality of PSTN line interface devices connected to a signalling interface and switching device each by a digital bidirectional link, being a plurality of subscriber terminal line interface devices connected by digital bidirectional link to the above signalling interface and switching device where one or more S devices may be connected in cascade to the same T link, being a plurality of subscriber terminal devices connected to the above S devices via corresponding subscriber terminal lines and being, finally, a Call Server device connected to the above H device via a data line State of the art: Various voice and data switching systems make use of distributed architectures with modules interconnected by means of bidirectional digital links, being each solution different from the others for the type of functions performed by the various components of the architecture and for the ways information is transmitted through the interconnection digital links.

Distributed architectures are commonly adopted where access functions are assigned to specific elements while switching functions are performed by swhitching elements controlled by centralized processors which perform the signaling processing functions, the call routing functions and the traffic management functions in a manner similar to the one adopted in this invention.

However, none of the solutions currently adopted, as far as we presently know, is using a transmission method for the traffic information which protects such information, within the interconnection network, from intentional or unintentional unauthorized access.

In addition, the invention uses proprietary and innovative methods for the multiplexing of signaling and traffic information both for the digital links belonging to the internal interconnection network and for the subscribers lines between the system and the subscribers terminals.

## Description

**DESCRIPTION** of the invention entitled "Voice and Data Distributed Architecture Modular Secure Switching System" in the name of the applicant **Teledelta 98 S.r.I.** located in Viale Leonardo da Vinci 114 Roma (RM) Cap. 00145, Cod. Fisc. 07725570589, P.I. 01852211000, filed in Italy on 5 June 2007, with registration number: RM 2007 A000311.

### DESCRIPTION

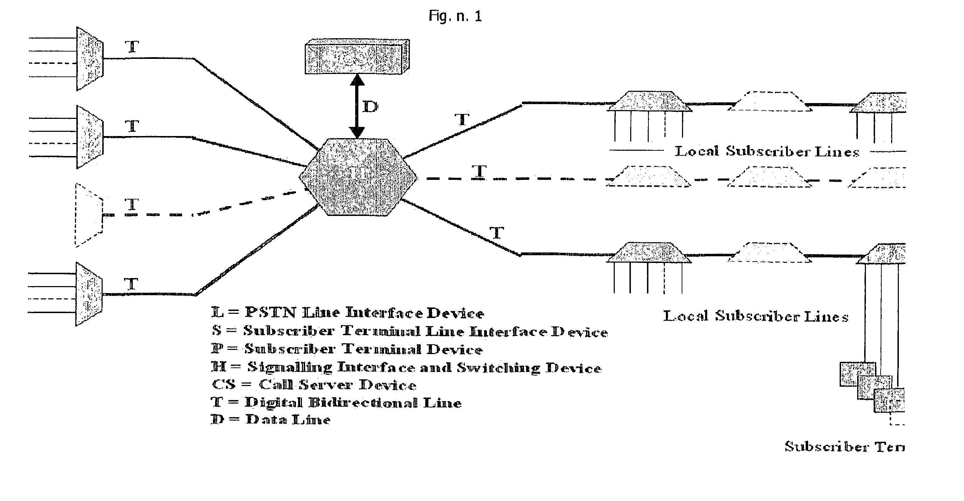

The invention consists of a Switching System for voice and data implemented by means of a modular, distributed architecture like the one described as a possible example, but not limited to it, by Fig. 1, being such architecture implemented by means of a plurality of PSTN line interface devices **(L)** connected to a signalling interface and switching device **(H)** each by a digital bidirectional link **(T),** being a plurality of subscriber terminal line interface devices **(S)** connected by digital bidirectional link (**T**) to the above signalling interface and switching device **(H)** where one or more **S** devices may be connected in cascade to the same **T** link, being a plurality of subscriber terminal devices **(P)** connected to the above **S** devices via corresponding subscriber terminal lines and being, finally, a Call Server device **(CS)** connected to the above **H** device via a data line **D.**

### General

With reference to Fig. 1 the operation of the System being the subject of the invention may be described as follows.

A variety of telephone and data lines belonging to one or more line switched networks (shown in Fig. 1 as "PSTN lines") are connected to one or more access device (shown in Fig. 1 as type L devices).

The above PSTN lines may, indifferently, be analogue or digital lines whereas these latter may either be single or multiple lines.

Type L devices have the function of extracting / inserting onto the lines connected to them the signalling criteria relative to the calls in progress and, at the same time, have the function of receiving / transmitting onto the same lines, the telephone or data signals that constitute the traffic information.

The signalling criteria extracted from the above PSTN lines are converted by type L devices into messages for the Call Server (CS) and are sent to the latter through the type H device; the signalling criteria to be inserted onto the PSTN lines are generated by the type L devices on the bases of the signaling messages received from the same Call Server through the above H device.

The telephone or data signals received from the analogue PSTN lines are converted into digital encrypted signals by the type L devices and are sent to the H device.

The digital encrypted signals received from the H device and destined to analogue PSTN lines are decrypted and converted to analogue by the type L devices and then are sent to the corresponding network lines.

The telephone or data signals received from digital PSTN lines are extracted, buffered and synchronized with local timing by the type L devices and then are sent, as encrypted digital signals, to the H device.

The digital encrypted signals received from the H device and destined to digital PSTN lines are decrypted, buffered and synchronized with local timing by the type L devices and then are sent to the corresponding network lines.

The traffic information (voice or data) once converted into digital encrypted signals and the signalling messages generated by a given L device and destined to the H device are time division multiplexed and are sent to the above H device as a single TDM signal (TDM - Time

Divisione Multiplexing) through the line shown in Fig. 1 as T.

The digital encrypted traffic information (voice or data) and the signalling messages destined to a given L device are time division multiplexed by the H device and are sent to the above L device as a single TDM signal through the line shown in Fig. 1 as T.

The device shown in Fig. 1 as H receives a variety of TDM signals organized in superframes, frames and slots and, as its first function, has the task of extracting from the above incoming TDM signals the signalling messages contained in each received superframe and to send them, through the data line D, to the Call Server CS after having inserted the identity of the origin T line in the message body.

The device shown in Fig. 1 as H receives the signalling messages from the Call Server CS and, as its second function, has the task of generating a variety of outgoing TDM signals, mutually synchronous, organized in superframes, frames and slots and to insert the received messages into such TDM signals according to the routing directives inserted by the same Call Server within the body of each message.

The device shown in Fig. 1 as H receives from Call Server specific signalling messages to control the temporary connection of individual slots belonging to received TDM signals to corresponding slots belonging to transmitted TDM signals; device H, as its third function, has the task of extracting from the incoming TDM signals the content of the slots specified by the control messages as "input" and to insert such content into the corresponding slots specified by the control messages as "output".

The device shown in Fig. 1 as H receives from Call Server specific "Time set" messages containing the current date and hour of the Call Server CS; ; device H, as its fourth function, has the task of generating the System reference time base, keeping the difference between such time base and the Call Server timing below a predefined margin and to distribute such system reference timing as "Time Mark" messages to be regularly inserted into the first superframe of each minute time interval.

The devices shown as S in Fig. 1 are used to connect one or more user terminal lines (labeled as "Local Subscribed Lines") to the system, thus permitting such lines to access the services provided by the PSTN lines connected to the system.

The devices shown as S in Fig. 1 receive a single incoming TDM signal organized in superframes, frames and slots; such devices, as their first function, have the task of extracting from such TDM signal both the signalling messages and the traffic information destined to the terminal lines to be served by the device, multiplexing together the information and the messages destined to the same terminal line and then sending such multiplexed information to the target line as a digital signal; the traffic information will be sent to the terminal lines just like it is in the TDM signal, i.e. in encrypted mode.

The devices shown as S in Fig. 1 receive from each terminal line a multiplexed digital signal containing both the traffic information and the signalling messages relative to such line; such devices, as their second function, have the task of regenerating the outgoing TDM signal with the same structure and the same content of the incoming TDM signal, just replacing the traffic information destined to a served terminal line with the corresponding traffic information coming from the same terminal line; such function is also named as "drop-insert function".

The devices shown as S in Fig. 1 receive signalling messages form the various served terminal lines; such devices, as their third function, have the task of inserting into the outgoing TDM signal the signalling messages coming from the served terminal lines, by using free signalling blocks available in the incoming TDM signal.

Each active terminal line of the S devices shall be terminated by an appropriate P device constituting the User Terminal Equipment. P devices will perform all the necessary functions to permit System Users to answer incoming calls both coming from PSTN lines and from other System Users, to seize any available and accessible PSTN line and to set up a call to external Users, to set up a call to internal Users, to transfer an incoming or outgoing call to any other internal User, to hold one or more active calls.

In addition to the specific call handling functions, P devices will permit System Users to perform additional service functions and, more precisely: a) identification of the User which is activating the terminal device, b) setting of the terminal device ring modes, c) setting of the cryptographic keys for the encryption / decryption of traffic information, d) short dialling for predefined User list, e) terminal operating mode selection.

In addition to the above described functions, a dedicated input/output interface of the P devices will permit the Call Server CS to remotely read and write a set of so called "service inputs" and "service outputs" which may be used for telemetry and telecommand purposes according to the specific User needs.

Some of the currently preferred implementation solutions for the system and for the various component devices are now described as possible examples and without any limiting meaning.

### Signalling Messages

Signalling messages, in the currently preferred choice, are of fixed lenght and are constituted by 8 bytes, being the first one used as "start of message", the second one used as "message type" and being the remaining 6 bytes used as message information payload.

In particular, in the preferred current choice, the "start of message" byte is set to the hexadecimal value A5.

### TDM Signal

In the currently preferred choice the TDM signal used for the transmission of both traffic information and signaling messages is constituted by "frames" of 256 bits, being consecutive frames organized in "superframes" of 8 frames each, numbered from 0 to 7, for a total of 2,048 bits per superframe, being such TDM signal transmitted at a bit rate of 2,048,000 bit/second (corresponding to 2.048 Mbps).

Each "frame" of the TDM signal will be constituted by 256 bits, subdivided into 32 octets or "slots", numbered from 0 to 31, being slot #0 used as "start of frame", being slot #16 used for carrying bytes belonging to signalling messages and being the remaining 30 slots used for carrying the traffic information at the rate of 64 Kbit per second for each individual traffic flow.

The slots used as "start of frame" will be set to the hexadecimal value C6 for the first frame of each superframe (i.e. frame #0), while in the remaining 7 frames of the same superframe such slot will be set to the hexadecimal value 6C.

The 8 slots reserved for carrying the signalling information belonging to the 8 frames of the same superframe will be used as an indivisible block for carrying an entire signalling message; all the slots belonging to unused indivisible blocks shall be set to the fixed hexadecimal value 55.

Superframes, which will last exactly 1 msec, will be used as system operational clock, being the first superframe of each minute interval used for carrying a specific "Time Mark" message containing the current date and the progressive numbering of the current minute of the day; by this convention each individual superframe may be identified by the pair M, N of integers, where M is the progressive numbering of the current minute in the day (between 0 and 1,439) and N is the progressive numbering of the superframe in the current minute (between 0 and 59,9999).

### Traffic information Encryption and Decryption

In the currently preferred choice the encryption and decryption of the traffic information contained in the TDM digital signals is performed by using the same encrypting sequence generated in a synchronous way both in the L and in the P devices of the system, being such sequence constituted by a series of code blocks of 2,048 bits univocally associated to the M, N indexes of the superframes of the TDM signals and to the value of a cryptographic variable Z_{G} to be preset daily in the system by appropriately appointed security officers.

The conventional numbering R₀, R₁, R₂, etc... of the superframe indexes in the system is obtained by the expression Rᵢ = Mᵢ x 60.000 + Nᵢ, being each code block Kₚ of the above defined encrypting sequence univocally associated to the value of corresponding index Rₚ.

The mathematical principle for the generation of the above code blocks Kₚ as a function of the cryptographic variable Z_{G} and as a function of the value of the corresponding index Rₚ is not part of the present invention; consequently it is not further described, being any generation logic compatible with the described operational concept acceptable for the purposes of the system.

In the currently preferred solution when any input / output device in the system is next to transmit the superframe with index Rₚ to device H, the content of all the slots used for carrying traffic information (i.e slots from #1 to #15 and from #17 to #31) will be encrypted by using code block K_{q} associated to the superframe index R_{q} corresponding to the time interval when the currently transmitted information will be finally received after the switching (and the consequent delay) performed by device H.

In particular, since device H in the currently preferred solution, will insert a constant delay of 2 superframes frpm the beginning of the reception of the incoming superframe containing a given set of information samples and the beginning of the transmission of the outgoing superframe containing the same set of samples after the switching, it will be required that the encryption of the outgoing superframe of index Rₚ will be done by using the code block K(ₚ₊₂) corresponding to the next to come superframe index R₍ₚ₊₂₎

As a consequence L devices shall encrypt the traffic information contained in the transmitted superframe of index Rₚ, by mod-2 adding each bit of the superframe with the corresponding bits of the code block K₍ₚ₊₂₎, with the exception of bits belonging to slots #0 and #16 of the superframe which will be left unchanged.

Consequently L devices shall decrypt the traffic information contained in the received superframe of index R_{q}, by mod-2 adding each bit of the superframe with the corresponding bits of the code block K_{q}, with the exception of bits belonging to slots #0 and #16 of the superframe which will be left unchanged.

According to the same principle described above, P devices shall decrypt the 64 bits corresponding to the traffic information received within the superframe with index Rq by modulo-2 adding the 64 bits extracted from the code block K_{q} and corresponding to the slot used for the traffic information at the origin when first entering the system.

Consequently P devices shall encrypt the 64 bits corresponding to the traffic information to be inserted within the superframe with index Rₚ by modulo-2 adding the 64 bits extracted from the code block K₍ₚ₊₂₎ and corresponding to the slot to be used for the traffic information at destination when last exiting the system.

### L type Devices

L type devices perform the line interface function between the switching system and the PSTN network, working according to the general principle described above, being the currently preferred solution characterized by the implementation choices described below.

In the currently preferred solution the L type devices will be specialized by type of PSTN line to be interfaced, being then envisaged several different versions of the L devices, one for each type of PSTN lines.

It is currently envisaged that a first version of L device will be specialized for interfacing 30 PSTN analogue lines (version L-AN), a second version will be specialized for interfacing 30 ISDN digital lines (version L-DG), a third version will be specialized for interfacing four PCM E1 channels (version L-PC).

The devices of type L-PC will derive a reference 2.048 MHz clock from one of the incoming signals, being such reference signal made available to device H to be used as time reference for the generation of the system timing.

The timing logic of type L device is such that they will generate TDM output signals synchronous with TDM input signals received from the H device and with identical superframe and frame timing; thus in the time interval of 488.28125 nanoseconds when the first bit of the frame #0 of the superframe #0 is received by the L device, the same device will output the first bit of the frame #0 of the superframe #0 of the TDM output signal.

Superframe indexes Rᵢ of the TDM output signals of the L devices are conventionally considered to be identical to the corresponding indexes of the TDM incoming signals.

According to the above convention for the superframe indexes, should the overall propagation delay between devices H and L be less than 500 microseconds (per direction), device H will start receiving the superframe with index Rₚ from L devices before the same H device will end the transmission of the superframes with index Rₚ; consequently a constant delay of 2 superframes will be introduced by device H between the time 8 samples of traffic information are received and the time the same samples are re-transmitted.

In the currently preferred solution, code blocks K to be used for the encryption / decryption of the traffic information in the L devices will be generated by a plug-in module of the same L devices

### H type Device

Device H perform the functions of extracting / inserting signalling messages form / into the TDM signals and the functions of switching the traffic information, according to the working principle described above, being the solution currently preferred characterized by the implementation choices described below.

In the currently preferred solution device H is realized as to receive and transmit up to 8 TDM signals and communicates with the Call Server CS via an asynchronous data line D according to RS.232 standard at a bit rate of 115 Kbps.

The 8 ports dedicated to the reception and transmission of the TDM signals may be used, indifferently, for communicating with L type devices, S type devices or with other H type devices, being the correspondance between each port and the device connected to it made known in advance to the Call Server CS.

An additional port is available in device H to receive a clock signal to be used, optionally, as reference for the generation of the system timing

The switching function is realized in device H as to introduce a pre-defined constant delay between the superframes during which the traffic information are received and the superframes during which the same information are re-transmitted.

In particular such switching delay, in the current solution, is pre-determined at a value of 2 milliseconds, corresponding to 2 entire superframes; however such delay could be set to any other integer number of superframes according to the maximum expected propagation delay in the system.

### Type S Devices

Devices S perform the functions of extracting / inserting signalling messages and traffic information between one TDM signal and the terminal subscriber lines, according to the working principle described above, being the solution currently preferred characterized by the implementation choices described below.

In the currently preferred solution each S device is operating on a single TDM signal and is able to extract / insert from/onto such signal both the traffic and the signalling information relative to a maximum of 15 terminal subscriber lines, where the correspondance between TDM slots and terminal lines depends from the terminating port used in device S and from the choice of the slot group #1 to #15 or, alternatively, #17 to #31, being such choice done by means of a two positions switch.

Consequently, in the current solution, not more than 30 subscriber lines shall be terminated on the same TDM signal by means of any number of S, provided the correspondance of TDM slots and terminal lines is univocously determined.

In the currently preferred solution the terminal subscriber lines between devices S and devices P are made by double symmetric pairs where transmission is performed in full duplex asynchronous mode by 8 bit characters, 1 start bit and 1 stop bit at 115 Kbps according to RS.485 standard.

In particular traffic information and signalling messages from devices S to terminal devices P are outbound multiplexed by using a series of 10 characters packets which will have a constant first character used as "Packet Start" , a second character used for carrying the signaling data and the remaining 8 characters used for carrying 8 samples of traffic information contained in the superframe which was just received by device S.

Since TDM signal has a bitrate of 2.048 Mbps, 64 traffic information bit will be received at each superframe (i.e. at each millisecond) and, consequently, one packet per millisecond will be generated; since each packet is made of 100 bits, it will last 869.5 microseconds at the bitrate of 115 Kbps, then leaving a margin of 130.5 microseconds between two consecutive packets.

In addition, since one byte per packet will be reserved for the transmission of the signalling information, a maximum throughput of one signalling message every 8 milliseconds will be allowed for each P terminal device.

By means of a similar mechanism the inbound multiplexing of traffic information and signalling messages from P devices to S devices will be done by generating one 10 character packet for each received packet and by structuring such packet exactly like the one received in the outbound direction.

### P type Devices

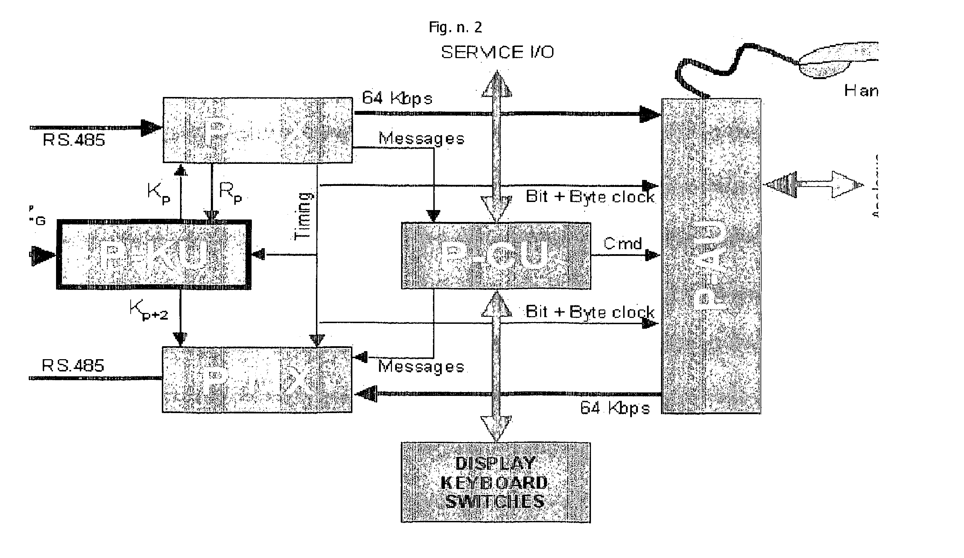

Type P devices perform the functions of extracting / inserting both the signalling messages and the traffic information from / to the packets sent over the subscriber terminal lines, according to the working principle described above, being the solution currently preferred for the realization of such devices described by Fig. 2 and being such solution characterized by the implementation choices described below.

The traffic information and the signalling messages transmitted from device S to device P as outbound multiplex signals will be demutiplexed by device P which, by using the "Time Mark" received messages will reconstruct the system time base and, consequently, the received superframe counting.

Device P will use the superframe counting Rₚ to generate the code blocks Kₚ and K₍ₚ₊₂₎ necessary to encrypt or decrypt the superframe contents and, more specifically, to decrypt the 8 traffic information samples contained within the received packets and to encrypt the 8 traffic information samples to be inserted into the transmitted packets.

The traffic information received in the multiplexed outbound packet corresponding to superframe of index Rₚ will be decrypted by device P using the code block Kₚ corresponding to the currently received superframe.

In a similar way the traffic information sent by device P to device S inside the multiplexed inbound packet destined to the superframe of index Rₚ will be encrypted by using the code block K₍ₚ₊₂₎ corresponding to the superframe during which they will be decrypted.

The signalling messages addressed to torminal device P will be used within the dialogue between user terminal and Call Server CS for incoming and outgoing call processing, according to the specific logic implemented in the system.

Device P will contain a De-multiplex Unit (P-DX) which receives and processes the multiplexed outbound packets sent by device S, in order to extract from such packets both the signalling messages and the traffic information.

The above P-DX Unit, in addition to the above described functions, will receive and process "Time Mark" messages in order to reconstruct the superframe timing and, consequently, the bit clock and byte clock synchronous with it.

Device P will contain a Management and Control Unit (P-CU) which receives the signalling messages and generates the signalling messages addressed to the Call Server CS.

The above P-CU Unit will include a display device (to provide visual information to local user), a set of pushbuttons and switches (to receive criteria dealing with the call in progress from local user) and a ring generator (to call local user attention).

The above P-CU Unit will include a "service" input / output interface to handle 8 binary inputs and 8 binary outputs; such 8 binary inputs will be regularly read by the P-CU unit and their status will be transferred to the Call Server CS via a dedicated telemetry message, while the staus of the 8 binary outputs will be set by the P-CU Unit in accordance with the content of the telecontrol messages received by the Call Server CS.

Device P will contain a Crypto Sequence Generation Unit (P-KU) which, by using the current superframe index, will generate and make available the 2,048 bit code blocks necessary to decrypt the traffic information being currently received and to encrypt the traffic information currently being transmitted. In particular should the superframe with index Rₚ be currently received, the P-KU Unit will generate and make available both the code block Kₚ for decrypting the traffic information being currently received and the code block K₍ₚ₊₂₎ for encrypting the traffic information being currently transmitted.

The above P-DX Unit, after the multiplexed outbound packets have been received, will be able to use the code blocks provided by the P-KU Unit to decrypt the received traffic information and to provide such decrypted information as a digital signal at 64 Kbps together with the associated bit clock and byte clock.

Device P will contain a Multipexing Unit (P-MX) which receives both the traffic information (as digital signal at 64 Kbps sybchronous with the bit clock and byte clock provided by P-DX) and the signalling messages to be transmitted; such P-MX Unit will process the received information and will generate the inbound multiplexed packets to be transmitted to the S devices according to the previously described format.

The above P-MX Unit will be able to use the code blocks provided by the P-KU unit to encrypt the traffic information to be transmitted and to provide such encrypted information as a set of 8 characters to be inserted into the multiplexed inbound packets.

In the currently preferred solution the P-KU Unit is implemented as plug-in unit of the terminal device P.

Device P will contain an Audio Unit (P-AU) which is able to convert the traffic information received as a digital signal at 64 Kbps together with its bit clock and byte clock into the corresponding output signal in the audible band (300-3400 Hz). In particular such P-AU Unit will transform the digital signal corresponding to the decrypted traffic information provided by the P-DX Unit into an analogue signal in the audible band (300-3400 Hz).

The same P-AU Unit will be able to convert the input signal in the audible band (300-3400 Hz) into a digital signal at 64 Kbps synchronous with the bit cock and byte clock received as timing reference inputs.

In the currently preferred solution the analogue input / output signal of the P-AU Unit may be connected either to a local handset (part of the P-AU Unit) or, alternatively, to any external device via an appropriate I/O socket.

## Claims

1. Switching System for voice and data **characterized by** being realized by a distributed modular architecture like, but not limited to, the one described as a possible example in Fig. 1, being such architecture implemented by means of a plurality of PSTN line interface devices **(L)** connected to a signalling interface and switching device **(H)** each by a digital bidirectional link **(T),** being a plurality of subscriber terminal line interface devices **(S)** connected by digital bidirectional link **(T)** to the above signalling interface and switching device **(H)** where one or more **S** devices may be connected in cascade to the same **T** link, being a plurality of subscriber terminal devices **(P)** connected to the above **S** devices via corresponding subscriber terminal lines and being, finally, a Call Server device **(CS)** connected to the above **H** device via a data line **D.**

2. Switching System for voice and data as per Claim 1 **characterized by** the fact that traffic information and signalling information are transmitted between pairs of modules of the system as time division multiplexed digital signal, also called TDM signal, being such TDM signal organized in superframes, frames and slots and being the various TDM signals within the system synchronous with a common system timing.

3. Switching System for voice and data as per Claim 1 **characterized by** the fact that traffic information and signalling information are organized as per Claim 2, where each slot consists of 8 bits, each frame consists of 32 slots and each superframe consists of 8 frames.

4. Switching System for voice and data as per Claim 1 **characterized by** the fact that traffic information and signalling information are organized as per Claim 2 and Claim 3, being the first slot of each frame reserved for the transmission of special characters used as frame and superframe synchronism.

5. Switching System for voice and data as per Claim 1 **characterized by** the fact that traffic information and signalling information are organized as per Claim 2, 3 and 4, being the hexadecimal character **C6** used as frame synchronism for the first frame of each superframe, while the hexadecimal character **6C** is used as frame synchronism for the remaining frames of the superframe.

6. Switching System for voice and data as per Claim 1 **characterized by** the fact that the signalling information are transmitted as messages constituted by a constant number of characters.

7. Switching System for voice and data as per Claim 1 **characterized by** the fact that the traffic information and the signalling information are organized as per Claim 2, 3 and 6, being the sixteenth slots of each frame used for sending characters of the signalling messages.

8. Switching System for voice and data as per Claim 1 **characterized by** the fact that the traffic information and the signalling information are organized as per Claim 2, 3, 6 and 7, being each signalling message constituted of 8 characters.

9. Switching System for voice and data as per Claim 1 **characterized by** the fact that the traffic information and the signalling information are organized as per Claim 2, 3, 6, 7 and 8, being each signalling message entirely transmitted in the 8 slots reserved for the signalling characters belonging to the 8 frames of a superframe, being the first character of the signalling message transmitted in the sixteenth slot of the first frame, the second character transmitted in the sixteenth slot of the second frame and so on till the last of the eight frames of the superframe.

10. Switching System for voice and data as per Claim 1 **characterized by** the fact that the system is interconnected with the public switched telephone network, also called PSTN, by means of specific access devices specialized for such function, being such devices connected to other devices of the system by means of one or more bidirectional digital links organized according to Claims from 2 through 9.

11. Switching System for voice and data as per Claim 1 **characterized by** the fact that the system is interconnected with the PSTN network by means of specific access devices as per Claim 10 , being such access devices further specialized for the type of PAIN line to be interfaced.

12. switching System for voice and data as per Claim 1 **characterized by** the fact that the system is interconnected with the PSTN network by means of specific access devices as per Claim 10 , being such access devices further specialized for the type of PSTN line as per Claim 11 and being one specific version of this device specialized for interconnecting 30 analogue lines, being such device interconnected with other parts of the system by means of a single bidirectional digital link organized according to Claims form 2 through 9.

13. Switching System for voice and data as per Claim 1 **characterized by** the fact that the system is interconnected with the PSTN network by means of specific access devices as per Claim 10 , being such access devices further specialized for the type of PSTN line as per Claim 11 and being one specific version of this device specialized for interconnecting 30 digital ISDN lines, being such device interconnected with other parts of the system by means of a single bidirectional digital link organized according to Claims form 2 through 9.

14. Switching System for voice and data as per Claim 1 **characterized by** the fact that the system is interconnected with the PSTN network by means of specific access devices as per Claim 10 , being such access devices further specialized for the type of PSTN line as per Claim 11 and being one specific version of this device specialized for interconnecting 2 PCM digital lines at 2.048 Mbps, being such device interconnected with other parts of the system by means of two bidirectional digital link organized according to Claims form 2 through 9.

15. Switching System for voice and data as per Claim 1 **characterized by** the fact that the system is interconnected with the PSTN network by means of specific access devices as per Claim 10 in the specific version which interfaces 2 PCM signal as per Claim 14, being such device realized as to provide a reference clock signal at 2.048 Mbps derived from one of the incoming PCM signals.

16. Switching System for voice and data as per Claim 1 **characterized by** the fact that the system is interconnected with the PSTN network by means of specific access devices as per Claim 10 being such devices able to extract and insert on the interconnected lines the signalling criteria dealing with the calls in progress and, at the same time, to receive and to send on the same lines the voice or data signals which constitute the traffic information.

17. Switching System for voice and data as per Claim 1 **characterized by** the fact that the system is interconnected with the PSTN network by means of access devices as per Claims from 10 through 16, being such devices able to encrypt the traffic information inserted into the outgoing TDM signals and being the same devices able to decrypt the traffic information contained inside the incoming TDM signals by using code blocks provided by cryptographic sequence generators contained in the same access devices.

18. Switching System for voice and data as per Claim 1 **characterized by** the fact that the system is interconnected with the PSTN network by means of access devices as per Claims from 10 through 16, being such devices able to encrypt / decrypt the traffic information by using code blocks provided by cryptographic sequence generators as per Claim 17 and being such cryptographic sequence generators made as plug-in modules contained in the same access devices.

19. Switching System for voice and data as per Claim 1 **characterized by** the fact that the switching functions and the functions of extracting and inserting the signalling messages from the TDM digital signals are performed by specialized devices that, as their first function have the task of extracting such TDM digital signals the signalling messages they contain and of sending such messages on an output data line, inserting into the message body the identity of the source TDM signal, as their second function have the task of generating a plurality of output TDM signals organized as per Claim from 2 through 9, inserting into such TDM signals the signalling messages received from an input data line in accordance with the destination of each message as specified by a character inside the message body, as their third function have the task of interpreting specific command messages received from an input data line and, according to the content of such command messages, of presetting the status of a Space and Time Switching Matrix contained inside the same device which will be able to switch in any possible combination the slots contained in the incoming TDM signals into the slots inserted in the outgoing TDM signals, as their fourth function have the task of generating the system reference time base in the form of messages inserted inside the first superframe of each new minute time interval, being the origin of such time base modified by the same devices according to the content of specific synchronization messages received form an input data line.

20. Switching System for voice and data as per Claim 1 **characterized by** the fact that the devices specialized for the switching functions and for the signalling messages extraction / insertion as per Claim 19 are equipped with one asynchronous data line for the exchange of signalling messages with the Call Processor device and are equipped with 8 ports for the input and output of 8 TDM digital signals.

21. Switching System for voice and data as per Claim 1 **characterized by** the fact that the devices specialized for the switching functions and for the signalling messages extraction / insertion as per Claim 19 are realized as to accept an external reference timing signal at 2.048 Mbps, being such signal, if present, used as time reference instead of the time reference contained in the device itself.

22. Switching System for voice and data as per Claim 1 **characterized by** the fact that, being a given TDM digital signal of the system dedicated to terminal traffic, the drop-insert functions both for signalling and for traffic information on such TDM signal are performed by a specialized terminal line interface device.

23. Switching System for voice and data as per Claim 1 **characterized by** the fact that the specialized terminal line interface devices as per Claim 22 are realized as to interface up to 15 terminal lines by means of 15 I/O sockets, being each one of such I/O sockets corresponding to a specific slot of the TDM signal and being the set of the 15 I/O socket associated either to the group of slots from 1 through 15 or to the group from 17 through 31, and being the choice of the specific group determined by the binary choice made by means of a mechanical or logical switch in the device itself.

24. Switching System for voice and data as per Claim 1 **characterized by** the fact that the specialized terminal line interface devices as per Claim 22 are connected to the user terminals by means of a line constituted by a double symmetric pair, being the transmission of the traffic information and of the signalling information made by means of messages sent in both direction at a regular repetition rate, being each message constituted by a constant number of asynchronous characters and being some of these characters used for carrying signalling data, while other characters are used for carrying traffic data.

25. Switching System for voice and data as per Claim 1 **characterized by** the fact that the specialized terminal line interface devices as per Claim 22 are using messages sent at constant repetition rate as per Claim 24, being such messages constituted by 10 characters, where the first character is constant, the second character is used for carrying signalling information, the remaining 8 characters are used for carrying 8 sampies of traffic information, being the transmission of such messages synchronized with the complete reception of a superframe and being each character of such messages constituted by 8 bits plus one start bit and one stop bit and being such characters transmitted at a rate of 115 Kbps.

26. Switching System for voice and data as per Claim 1 and as per Claims from 2 through 25 **characterized by** the fact that functions of user terminal device are performed by specialized terminal devices, being each of such devices constituted by a De-multiplexing Unit (P-DX), a Management and Control Unit (P-CU), a Crypto Sequence Generation Unit (P-KU), a Multiplexing Unit (P-MX) and an Audio Unit (P-AU), being the above P-DX Unit used to receive and process the digital signal received from the terminal line in order to extract and separate from such received signal both the traffic information and the signalling messages and in order to reconstruct the system reference timing, the byte clock and the bit clock, being the same above P-DX Unit used to decrypt the traffic information by using code blocks generated by the P-KU Unit and being such decrypted traffic information provided as inputs to the P-AU Unit as a digital sequence at 64 Kbps associated to the corresponding bit and byte clock, being the above P-CU Unit used to receive and to process the signalling messages, consequently generating the outgoing signalling messages and being such P-CU Unit equipped by a display device, by a set of switches and pushbuttons and by an audible tone generator to permit interaction with the local user, being the above P-KU Unit used to generate, on the basis of the current superframe timing, the code blocks required to decrypt and to encrypt the traffic information, being the above P-MX Unit used to generate the transmitted constant rate messages and to insert into such messages both the signalling messages received from the P-CU Unit and the traffic information received from the P-AU Unit after having encrypted such traffic information by using the code blocks generated by the P-KU Unit, being the above P-AU Unit used to convert the traffic information received from the P-DX Unit as digital sequence at 64 Kbps into the corresponding analogue signal in the audible band 300 Hz - 3400 Hz and being the same P-AU Unit used to convert the input analogue signal in the audible band 300 Hz - 3400 Hz into the corresponding traffic information as digital sequence at 64 Kbps.

27. Switching System for voice and data as per Claim 1 and as per Claims from 2 through 25 **characterized by** the fact that the user terminal functions are implemented by means of a terminal device containing Crypto Sequence Generation Unit (P-KU) as per Claim 26, being the above Crypto Sequence Generation Unit (P-KU) implemented as a plug-in unit inside such user terminal device.
